Europäisches Patentamt

European Patent Office

Office européen des brevets

(19)

(11) Publication number: **0 122 730**
**A1**

## (12) EUROPEAN PATENT APPLICATION

(21) Application number: **84301850.8**

(22) Date of filing: **19.03.84**

(51) Int. Cl.³: **G 01 M 3/16**

(30) Priority: **17.03.83 GB 8307382**

(43) Date of publication of application:
**24.10.84 Bulletin 84/43**

(84) Designated Contracting States:
**AT BE CH DE FR GB IT LI LU NL SE**

(71) Applicant: **Maxwell, Anthony John**
**Residence le Mirabeau 4, Rue des Citronniers**
**Monte Carlo 98000(MC)**

(72) Inventor: **Maxwell, Anthony John**
**Residence le Mirabeau 4, Rue des Citronniers**
**Monte Carlo 98000(MC)**

(74) Representative: **Sturt, Clifford Mark et al,**
**MARKS & CLERK 57-60 Lincoln's Inn Fields**
**London WC2A 3LS(GB)**

(54) **Self energizing sensor.**

(57) The present invention in one aspect provides a sensor to be located adjacent to a body through which leakage of fluid or microbial corrosion of the body is to be detected, the sensor comprising two electrode (2, 3) and a filler (4) interposed with the electrodes (2, 3) wherein the filler (4) promotes electrolysis between the electrode (2, 3) subsequent to leakage through the body, or microbes from the microbial corrosion of the body, contacting the sensor, electric energy produced by the electrolysis being used to initiate an alarm.

The invention also provides a battery comprising two electrodes (2, 3) and a filler (4) interposed with the electrodes, wherein the filler (4) promotes electrolysis between the electrodes (2, 3) when triggered by the addition of an activator and wherein the electrodes (2, 3) and filler (4) are flexible whereby the battery may be wrapped around an object.

FIG.1.

Croydon Printing Company Ltd.

M&C FOLIO:     P45714X

## SELF ENERGISING SENSOR

The present invention relates to a battery and its development as a self energising sensor for leak and/or microbial corrosion detection.

There are many fields of technology which are in need of a physically simple and cost efficient arrangement for leak detection.  An integral part of the requirement is a reliable, low cost and effectively maintenance free power source.

The oil, gas and petro chemical industries are particularly in need of such an arrangement for leakage detection on buried land and sub-sea pipelines, piping systems and tanks.

A further important application for a early warning leak detection system is in the constructions industry for application on concealed water distribution systems, underfloor heating and air conditioning systems, and for the advanced indication and localization of roofing leaks, especially on single membrane roofing systems.

The importance of leak detection systems in other fields of technology will be appreciated by those skilled in the art.

The limitations of prior art liquid or wet gas corrosion and leak detection systems, especially where applicable to buried land and sub-sea pipelines transporting hydrocarbon liquids and gasses, is the difficulty of providing a constant and reliable maintenance-free power source. The majority of prior art systems utilize capacitive or resistive sensing probes, the circuits of which require power, and frequent adjustment.

Other and more sophisticated methods of corrosion and leak detection using acoustic energy, gamma or X ray techniques are complex, expensive, require frequent re-calibration and adequate constant power for their operation.

The present invention seeks to mitigate disadvantages of the prior art arrangements and to provide arrangements which better meet the requirements of various industries.

According to one aspect of the present invention there is provided a sensor to be located adjacent a body through which leakage of fluid or microbial corrosion is to be detected, the sensor comprising two electrodes and a filler interposed with the electrodes wherein the filler promotes electrolysis between the electrodes subsequent to leakage through the body or microbes from microbial corrosion thereof contacting the sensor, electric energy produced by the electrolysis being used to initiate an alarm.

According to a further aspect of the present invention there is provided a battery comprising two electrodes and a filler interposed with the electrodes, wherein the filler promotes electrolysis between the electrodes when triggered by the addition of an activator and wherein the electrodes and filler are flexible whereby the battery may be wrapped around an object.

When the leakage to be detected is a fluid containing water a preferred form of the sensor has the filler formed of a water absorbent material which is impregnated with a salt. Leakage results in water mixing with the salt whereby the sensor constitutes a salt water primary cell.

If the leakage contains salt water, as will often be so for marine applications, the filler need not be impregnated with salt. However, it is preferred that the filler remain in the form of a water absorbent material.

In a particularly advantageous form the filler is in the form of a strip or band of felt and the two electrodes are constituted by a silver coating on one side of the strip or band and a copper coating on the other side.

An alternative embodiment is adapted for use in conditions where microbiological activity can be expected. The filler is in the form of a feedstock for microbes so as to promote a rapid increase in microbe population in the region of the electrodes. A number of relatively common species of microbe oxidise sulphur thereby forming sulphuric acid. The sulphuric acid reacts with the electrode to produce electrolysis and thereby generate a current which can be used to initiate an alarm. Other microbes act on different substances so as to generate other acids which can also initiate electrolysis.

Embodiments of the present invention will now be described by way of example only and with reference to the accompanying drawings, in which:

Figure 1 is a diagrammatic illustration of a sensor for leak detection, in which the sensor is activated by the presence of water, and

Figure 2 illustrates a multi-layer battery/sensor arrangement,

Figure 3 is a diagrammatic illustration of a sensor for leak detection, in which the sensor is activated by the presence of microbes,

Figure 4 shows the application of a sensor to a pipeline seam weld, and

Figure 5 illustrates an electronic signal emitter located in the structure of a sensor.

One aspect of this invention is the provision of a flexible battery. The battery comprises two electrodes and a filler interposed with the electrodes. Electrolysis between the electrodes is promoted by the filler, when triggered by the addition of an activator. The electrodes and filler are flexible whereby the battery may be wrapped around an object, such as a pipe or hose. A flexible primary and secondary battery can be formed in the the shape of a flat tape or in a round or oval cross-section. The cell comprises conductive or non-conductive flexible polymer and fabric which have been coated or doped with suitable substances and laminated together.

An outer zinc mesh forms the negative electrode of the battery and a carbon fibre tow, made of ten to twelve thousand filaments, constitutes the positive electrode. The electrolyte is in the form of a dry powder or paste packed around the centred carbon fibre tow. The electrolyte is triggered by an activator which can be in liquid or gas form. As will be described, microbiological action can result in the production of sulphuric acid which can form an excellent activator for the electrolyte.

In its simplest form the battery is a "one shot" primary cell but it is considered possible to overcome polarisation problems and therefore produce a secondary cell.

Another aspect of the present invention is the provision of a sensor for and/or microbial corrosion leak detection. The sensor is to be located adjacent a body through which leakage of fluid or microbial corrosion of the body is to be detected. The sensor comprises two electrodes and a filler interposed with the electrodes. Electrolysis between the electrodes is promoted by the filler subsequent to leakage through the body or microbes from the microbial corrosion of the body contacting the sensor. Electric energy produced by the electrolysis is used to initiate an alarm.

Incorporated, and encapsulated within the tapes laminated structure, and directly connected to the tapes electrodes is a low power coded oscillator or emitter that is activated when an emf is produced across the electrodes; the emf being produced directly or indirectly by the leaking fluid or moist gasses absorbed into the sensor tapes structure. A suitable oscillator or emitter can be constructed by a person skilled in the relevant art. The detailed structure of the component does not form part of the present invention and such structure is not therefore discussed herein.

Sensor tapes are applied under, or in conjunction with pipeline or storage tank protective tape coatings, over weld seams, couplings, joints or around valves and other fittings, or spiralled along the length of the pipe or tank.

Applications are the oil and gas industry for buried land and sub-sea pipeline applications, for petrochemical plants, for buried pipes, for buried storage tank applications, for splash zone areas on production platforms where the sensor tapes could be installed directly on the metal surfaces and coated with protective epoxy type spray or brush applied coatings like "epicote" (Shell) The snesor tape would indicate any spreading corrosion under the coatings.

A further application is for the construction industry, especially for the roofing systems currently being installed that use single membrane sheets with the joints sealed by a sealing tape. The sensor tape would of course have an application with bitumen or multi-ply asphalt roofing materials.

Each length of sensor tape has its own coded oscillator, the low power short range transmission from which is received by hand held, or vehicle/helicopter mounted receiver/locators, thus enabling early identification and localization of spreading microbial corrosion or a leak under or through protective coatings.

The sensor will function with the ingress of moisture and microbial corrosion development either from the outside, where pipelines are generally in moist or water logged soils, or from the inside where microscopic leakage starts microbial corrosive action coupled with intergranular stress leading to slow leakage under the proctive coatings. Separation of the power input sources into the oscillator and a dual frequency or code transmission is easily possible using CMOS/OP-Amp technology.

In the case of buried sub-sea pipelines low frequency signals 20 - 32kHz transmitted through a few feet of sediment and sea water are picked up by remote operated vehicles (ROV's) that are used in the offshore petroleum industry for remote inspection of pipelines and sub-sea completion systems. The ROV would be equipped with the receiver antenna and receiver, the output signals from which are conveyed via the ROV's umbilical cord to conventional monitoring equipment on the surface vessel controlling the ROV.

UHF transmissions in the 400 MHz band also appear suitable for the buried land pipelines and tankes as distances of less than 50 feet are involved for the receiver pick-up.

The sensor comprises two or more electrodes separated by doped absorbant separators, wherein the doped separators promote electrolysis through interaction with the developing microbial corrosion or leaking fluid, the emf so produced powers an oscillator directly connected to the electrodes.

When the leakage to be detected is water, or water forms the principle volume of the liquid, a preferred form of sensor has the separators formed of a water absorbent non woven fabric such as "Webril" or "Novonette" impregnated with sodium chloride NaCl. Direct leakage and absorbtion into the fabric separator results in the water mixing with the NaCl, whereby the sensor then constitutes a salt water primary cell.

An alternative embodiment is adopted for longer term applications to minimize slow premature hydroscopic reaction due to age whereby the impregnated separators are sealed with a water soluable adhesive sealant.

If the leakage is, or contains sea water as can frequently happen in the case of sub-sea pipelines, the separators need not be impregnated, however, it is preferred that they are, in order to achieve enhanced results.

A further embodiment is adapted for use in non conductive fluids or where microbiological corrosion is expected, for example on hydrocarbon oil and gas pipelines, tanks and petrochemical piping systems, portable and waste water systems.

The separators are doped with cultures of sulfur oxidixing and sulfur reducing bacteria. (SOB) and (SRB) of the genera "Pseudomonadineae" (SOB) and "Desulfovibrio", "Desulfotomaculum", (SRB). The doped separators are coated after impregnation with a hydrocarbon degradable spray sealant to prevent premature activation during fabrication of the sensor tapes.

It is well known and accepted that certain groups of
aerobic and anaerobic microbial bacteria utilize
hydrocarbons and mixtures of water, hydrocarbon liquids,
gasses as feedstock for growth.  They affect
electrochemical mechanisms by producing corrosive acids,
changing oxygen concentrations and destroying protective
adhesive coatings.

A further embodiment of the microbial activated sensor
is the alternative impregnation of other separators with
"start off"culture feedstock in the form of "Peptone", a
water soluable mixture of proteosis and amino acids
commonly used as a nutrient for bacteria cultures.  The
ingress of hydrocarbon oil, gas water mixtures enriches
the feedstock, anaerobic and aerobic microbes, in the
fluid, surrounding materials and impregnated in the
separators rapidly develop, and adapt to the localized
micro enviroment, oxidizing sulfur and other compounds
in the hydrocarbons into sulfuric and other acids, which
activates a process of electrolysis within the sensor
tapes structure.

The sensor tape configuration comprises a metalized
polymer or fabric substrate, the fabric can be of nylon,
Nomex, Webril and can be metalized by vacuum deposition
or chemical reduction techniques.  The positive
electrode material comprises a copper coating on one face only of the fabric, the other surface being applied
to the adhesive side of the protective polymer
(polyethylene) or (PVC) tape. A fabric absorbent
separator suitably impregnated is laminationed to the
positive electrode.

The negative electrode comprises, zinc, magnesium,
nickle, aluminium or cadmium metalic flake or particles,
applied as for the cathode. A second doped separator is
applied to the coated surface of the anode, and the
process repeated resulting in at least two, but usually
four or six electrodes connected in series at the
surface contact areas of the encapsulated emitter. The
sensor tape surface in contact with the metal pipe
comprises an absorbent type felt or non woven fabric
such as, "novonette". This fabric has high dielectric
strength and insulation resistence but is highly
absorbent, chemical resistent with excellent moisture
retention. If the sensor tapes are applied to indicate
corrosion or leakage from internal and external sources
"novonette" forms the outer and inner external contact
surfaces of the sensor tape being laminated to the
appropriate electrodes and separators as required for
the particular application.

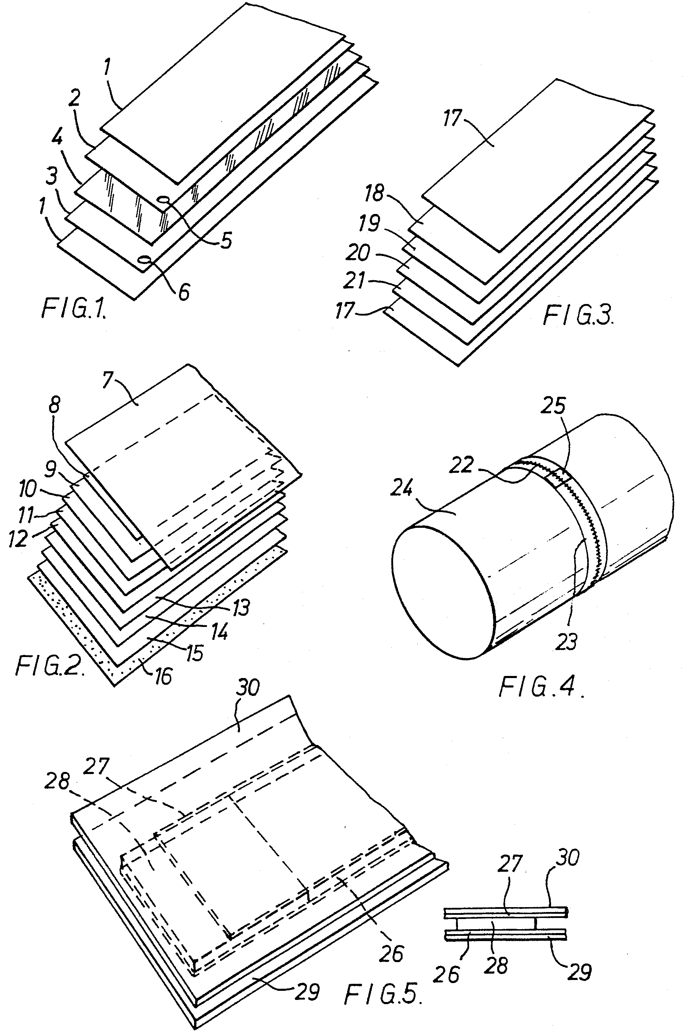

Figure 1 is a diagrammatic representation of a sensor
for leak detection. The sensor is in the form of a flat tape comprising a plastic or fabric absorbent covering 1, an anode 2, a cathode 3, and one or more layers 4 of absorbent paper, felt or polymer material. Electrodes 2 and 3 are dissimilar metallic tapes or stripes which may for example be formed of copper, silver, zinc, aluminium, magnesium, nickel, or metallic coated polymer or fabric tapes. The width and length of the sensor is determined in accordance with the application in which the sensor is to be used. Electrodes 2 and 3 are provided with respective electrical connectors 5 and 6. The electrodes and interposed filler 4 are bound together by the outer layers of absorbent adhesive tape 1.

The sensor is particularly suitable for use with pipelines. Lengths of the sensor are applied under, with or as part of the pipeline wrapping material which may be in the form of coal tar, bitumen or epoxy. Such coatings are commonly found on undersea oil and gas pipelines and riser pipes etc. associated therewith. A final mechanical protective concrete coating is often applied over the wrapping materials.

The sensor can be used to detect leaks from a buried land pipeline carrying fresh water, oil or gas etc. For this task the absorbent filler 4 is saturated with a sodium solution which is dried and applied as a dry electrolyte sandwiched between the electrodes 2 and 3.

Water penetrating through the outer cement protective of a pipeline is absorbed through the covering 1 of the sensor and contacts the absorbent filler 4. Electrolysis commences between the tape electrodes. The capacity to deliver current is proportional to the area of electrolyte created by the water leaking along the length of the sensor.

Where it is expected that water will penetrate the sensor, the filler 4 is impregnated with sodium chloride or salt ammonic which has been dried, thus resulting in a dry powder, crystals or paste. Ingress of water into the sensor effectively triggers the electrolyte so as to initiate electrolysis. It is believed that electrolytes can be formed which are responsive to the ingress of water, liquids, acids, and oil/gas water mixtures.

The electrochemical reaction between the electrolyte and the electrodes results in an EMF being generated across the electrodes. When a load is connected across the electrodes primary cell action results and a current is drawn. The current amplitude depends upon the load applied. The load may be accoustic pingers, beacons, or other alarm devices.

Hydrogen gas will often be released as a product of the electrolysis. This gas will escape from the exterior of the pipeline thereby localising the leak.

The sensor is particularly suitable for the detection of leaks in oil suction and discharge hoses which are used for transferring oil to and from tankers at sea. Such hoses are used where the tanker transfers oil to and from a buoy which is some distance from the shore due to shallow water near the shore. The sensor is readily incorporated in the hoses during their manufacture and can be particularly compatible with the polymers used to form the hose. Flexibility of the sensor is an asset because oil suction and discharge hoses are subjected to bending forces during normal operation. For this and other marine applications leakage to be detected may well be ingress of salt water. In these circumstances it is not essential for the filler 4 to be impregnated with salt. The filler 4 is however still formed of an absorbent material so as to hold the salt water between the electrodes and thereby promote electrolysis.

If an alternative form of sensor is used for leak detection in oil suction and discharge hoses, then the flexible battery of this invention can be used to power the sensor.

Depending on the length, spiral pitch of the sensor and diameter of the pipe, accoustic sub-surface pingers or sonic buoys are fixed on or near the pipelines and are connected to the sensor. Permanent surface or vessel mounted pinger locators enable pipelines to be monitored at all times. For pipelines, ducts or conduits installed on land the sensor can either form part of or be directly connected to a radio transmitter so as to provide alarm signalling.

In a particularly advantageous form the filler 4 is in the form of a strip or band of felt and the two electrodes 2 and 3 constituted by a silver coating on one side of the strip or band and a copper coating on the other side.

An alternative embodiment of the sensor is shown in Figure 2. The sensor comprises the outer polyethylene, PVC, Bitumen or Coal Tar protective tape wrapping 7, to which on the underside is laminated liquid absorbent and doped separator 8 on the underside of which is laminated a meatalized coated fabric substrate forming the positive anode electrode 9 on to which is laminated a second doped separator 10 on to the underside of which is laminated the metalized fabric substrate forming the negative cathode electrode 11. This process is repeated through 12 and 13 ending in a second liquid doped
absorbent fabric 16 in contact with a metalic body
through which developing microbial corrosion or leakage
is possible, such corrosion, moisture, liquid or gas
leakage bieng absorbed into the sensor structure.

An alternative embodiment of the sensor is adapted for
use in conditions where microbiological activity can be
expected. A diagrammatic representation of such a
sensor is shown in Figure 3. The sensor comprises an
outer absorbent adhesive cover of carbon black,
impregnated fabric or polymer or a carbon/graphite fibre
mat. The sensor has an anode 18 and a cathode 20 which
are formed of dissimilar metals. The materials
mentioned in respect of the Figure 1 embodiment are
suitable. The sensor of Figure 3 includes a carbon or
sulphate separator 19 which is in the form of a mat or
tape on a fabric. A second carbon or sulphate separator
21 is provided between the cathode 20 and an outer cover
17. The second separator 21 my alternatively be in the
form of an absorbent material.

The sensor of Figure 3 is similar to that of Figure 1
expect that the electrolysis is created by a microbial
action on and within the sensor. The sensor may be
applied directly onto a metal or concrete surface.
Figure 4 shows a typical application of the system to a pipeline seam·weld, 22 being the weld, 23 the sensor
tape applied directly onto the completed weld, 24 the
pipeline and 25 the emitter circuit positioned uppermost
in the wrap-around sensor to facilitate signal
detection. Electrodes 18 and 20 are separated by the
filler 19 which may be formed of sulphur, organic carbon
or similar saturated materials in paste, powder or
crystal form. The outer covering 17 of the sensor is
formed of similar materials to the filler 19.

The sensor of Figure 3 operates by reacting to the
growth of anaerobic sulphate reducing bacteria and/or
Pseudomonadaceae microbes which oxidise sulphur
producing sulphuric acid. It is not at present possible
to clearly identify which types of bacteria cause which
type of corrosion such a sulphate reduction. Tests have
however been conducted and the sensor has been found to
operate as described. The sulphuric acid produced by
the bacteria provide electrolytic action within the
sensor at the point of leakage through the pipeline.

For early detection the sensor is applied directly onto
the body to be monitored, such as a steel pipeline or
concrete sewer duct. In order to assist microbial
development in the sensor the covering 17 and filler 19
are formed of carbon black polymers, carbon coated
fibres or carbon/graphite tow or particles. These act as feedstocks and encourage a rapid growth in microbe
population

In conjunction with the leaking water/hydrocarbons,
fillers of carbon materials provide feedstocks for the
rapid growth of the anaerobic sulphate reducing and
other bacteria within the sensor.  This results in
electrolysis which generates an EMF between the
electrodes which can thus be used to energised or remote
alarm devices and monitoring equipment.

A further embodiment of the invention resides in the
combination of the features of the sensors of Figures 1
and 3.  Such a sensor is provided with a non-conductive
or active plastic separator tape dividing the two types
of reactive electrodes/cell action.  In certain
conditions this sensor will react due to microbial
activity in contact with the cover of the sensor.  The
cover of the sensor may be directly in contact with the
metal or concrete surface of the pipe or duct so as to
register microbial corrosion.  The other part of the
sensor will react to external ingress of liquids.
Separate dual connections from each sensor can be
provided and can be connected to a two frequency mode of
transmission.  This embodiment of the sensor results in
the type of leakage effecting the pipeline or structure
being easily identifiable.

Figure 5 shows the position and connection of the electrodes, 26 is a positive anode fixed to the under face side of the printed and encapsulated oscillator circuit module by a silver filled elastomeric conductive adhesive such as Emerson & Cuming "Eccocoat CC-40A". Numeral 27 indicates a similar connection of the cathode electrode to the upperside face of the oscillator module, 28 shows the printed circuit module which is printed on a flexible substrate and laminated between the series connected electrodes 29 and 30.

It is believed that the filler of the described sensors can be adapted to respond to liquids, gases or microbial corrosion as the activator initiating electrolysis.

The described sensor has applications in undersea pipelines, related risers, production and mooring structures, tanks, manifolds, both surface and sub-surface, land pipelines and storage tanks etc. in metal, concrete or plastic. The sensor can be used in industrial and domestic water systems and in chemical installations.

It will be apparent from the foregoing description that the present invention may provide the following:-

A microbial energized sensor that develops an emf due to the electrochemical action of certain groups of microbial bacteria oxidizing sulfur and other compounds in fluids and gasses into sulfuric and other acids, the action of which causes electrolysis.

A microbial energized battery, primary or secondary cell that develops an emf due to microbial action.

An open structure primary or secondary cell which allows the ingress of liquids, gasses or an electrolytic medium to create electrolysis within the open structure.

A self energizing sensor system in which microbial corrosion itself activates and monitors its own development.

A semi thin film circuit printed on a flexible polymer substrate with input power connections brought out onto the surfaces of the encapsulated circuit whereby a direct physical connection is possible using a conductive adhesive between the circuit module and external electrodes.

An open structure primary cell flexible tape configuration that enables wrapping around pipes, pipelines, tanks, conduits or ducts, or between plies of membrane flexible sheeting materials used for roofing protection.

An open structure primary cell sensor in which separators are impregnative and or coated with microbial cultures to accelerate development within the structure.

An open structure primary cell sensor in which separators are impregnated or coated with a microbial feedstock, such as carbon black, or "Peptone", or other organic cultures.

An open structure primary cell sensor in which the separators are impregnated with sodium chloride, dried and sealed with a water soluable sealent.

CLAIMS

1. A sensor to be located adjacent to a body through which leakage of fluid or microbial corrosion of the body is to be detected, the sensor comprising two electrodes and a filler interposed with the electrodes wherein the filler promotes electrolysis between the electrodes subseqeunt to leakage through the body, or microbes from microbial corrosion thereof, contacting the sensor, electric energy produced by the electrolysis being used to initiate an alarm.

2. A battery comprising two electrodes and a filler interposed with the electrodes, wherein the filler promotes electrolysis between the electrodes when triggered by the addition of an activator and wherein the electrodes and filler are flexible whereby the battery may be wrapped around an object.

3. Apparatus as claimed in claim 1 or 2, wherein the filler is a water absorbent material.

4. Apparatus as claimed in claim 3, wherein the water absorbent material is impregnated with a salt.

5. Apparatus as claimed in any preceding claim having a multiple arrangement of sequentially arranged electrodes and fillers.

6. Apparatus as claimed in any preceding claim wherein the filler is in the form of a felt having on either side disimilar metallic coatings which form the electrodes.

7. Apparatus as claimed in claim 6, wherein the metallic coatings are coatings of metals selected from the following group: copper, silver, zinc, aluminium, magnesium and nickel.

8. Apparatus as claimed in claim 1 or 2 wherein the filler is in the form of a feed stock for microbes.

9. Apparatus as claimed in claim 8, wherein the filler contains sulphur.

10. Apparatus as claimed in claim 1 or 2 wherein one of the electrodes is in the form of carbon fibre tow which is surrounded by the filler and in which another electrode is formed of a zinc mesh which surrounds the filler.

11. Apparatus as claimed in any preceding claim further comprising an electronic signal emitter provided within the sensor and directly connected to the electrodes of the sensor.

12. Apparatus as claimed in claim 11, wherein the emitter emits a signal of a frequency in the range of 20 to 32 Khz.

13. Apparatus as claimed in claim 1 or 2, wherein the filler is sealed by a water soluable adhesive sealent.

14. Apparatus as claimed in claim 1 or 2, wherein the filler contains a sulphur reducing bacteria.

15. Apparatus as claimed in claim 1 or 2, wherein the filler contains a sulphur oxidising bacteria.

16. Apparatus as claimed in claim 14 or 15, wherein the filler is contained within a hydro-carbon degradeable sealent.

17. Apparatus as claimed in claim 1 or 2, wherein the filler contains a water soluable mixture of proteosis and amino acids.

18. Apparatus as claimed in claim 1 or 2, wherein novonette is provided as a covering for the sensor.

19. Apparatus as claimed in claim 1 or 2, wherein the sensor has an outer absorbent adhesive cover of carbon black.

20. A sensor as claimed in claim 1, wherein the sensor has two independent arrangements of electrodes and fillers one of the arrangements being responsive to microbial corrosion and the other of the arrangements being responsive to the ingress of fluid.

FIG.1.

FIG.3.

FIG.2.

FIG.4.

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-A-3 004 520 (SIEMENS AG) * Page 7, lines 31-37; page 8, lines 1-3; claim 12; figure 1 * | 1,3,11 | G 01 M 3/16 |
| Y | | 2,5-7, 13,20 | |
| | --- | | |
| X | DE-B-1 144 413 (SIEMENS-SCHUCKERTWERKE AG) * Column 3, lines 1-12; figure 2 * | 1,3,11 | |
| Y | | 2 | |
| | --- | | |
| X | FR-A-2 048 653 (EURATOM) * Page 1, lines 5-15; claim 5; figures * | 1,3,4, 11 | TECHNICAL FIELDS SEARCHED (Int. Cl. 3) |
| Y | | 2,5-7, 13,20 | G 01 M 3 |
| | --- | | |
| X | US-A-3 200 388 (M.R. UHLIG) * Column 2, lines 27-38; figures * | 1,3,4, 11 | |
| Y | | 2,5-7 | |
| | --- -/- | | |

The present search report has been drawn up for all claims

| Place of search THE HAGUE | Date of completion of the search 06-07-1984 | Examiner VAN ASSCHE P.O. |
|---|---|---|

**European Patent Office**

**EUROPEAN SEARCH REPORT**

| | DOCUMENTS CONSIDERED TO BE RELEVANT | | Page   2 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| X | US-A-3 540 278  (H. DIAMOND et al.) <br> * Whole document * | 1,3,7, 11 | |
| Y | | 2,5,6, 13,20 | |
| | --- | | |
| X | US-A-4 200 493  (J.R. WILKINS et al.) <br> *   Abstract;   column   5,   lines 18-61;  column   16,   lines 18-52; figure 5 * | 1,8 | |
| Y | | 20 | |
| | --- | | |
| Y | GB-A-1 543 156  (J.S. TALBOT) <br><br> * Whole document * | 1-7,11 ,13,20 | TECHNICAL FIELDS SEARCHED (Int. Cl. ³) |
| | ----- | | |

The present search report has been drawn up for all claims

| Place of search <br> THE HAGUE | Date of completion of the search <br> 06-07-1984 | Examiner <br> VAN ASSCHE P.O. |
|---|---|---|